# EUROPÄISCHE PATENTANMELDUNG

(11) **EP 1 411 275 A1**
(43) Veröffentlichungstag der Anmeldung: **21.04.2004**
(21) Anmeldenummer: 03023318.3
(22) Anmeldetag: 15.10.2003
(51) Int. Cl.: F16H 61/00, F16H 47/06

(54) **Hydraulische Schaltungsanordnung für Automatgetriebe von Kraftfahrzeugen**

(30) Priorität: 19.10.2002 DE 10248828
(71) Anmelder: ZF FRIEDRICHSHAFEN AG, 88038 Friedrichshafen (DE)
(72) Erfinder: Fritz, Walter, 88090 Immenstaad (DE); Weber, Michael, 88289 Waldburg (DE)

(57) **Zusammenfassung**

Die Erfindung betrifft eine hydraulische Schaltungsanordnung bei Automatikgetrieben von Kraftfahrzeugen mit einem hydrodynamischen Drehmomentwandler und hydraulisch betätigbaren Verbrauchern, insbesondere Schaltelementen, wobei die Schaltungsanordnung aus einem von einer Primärpumpe gespeisten Primärkreis und einem von einer Sekundärpumpe gespeisten Sekundärkreis besteht.
Es wird vorgeschlagen, dass der Primärkreis (1) eine von der Primärpumpe (3) zum Wandler (10) führende Hauptdruckleitung (6) und eine an die Hauptdruckleitung (6) angeschlossene, zu den Schaltelementen (8) führende Zweigleitung (7) aufweist, dass der Sekundärkreis (2) eine von der Sekundärpumpe (13) zu einem Umsteuerventil (17) führende Nebendruckleitung (16) aufweist und dass der Sekundärkreis (2) mittels des Umsteuerventils (17) über eine Verbindungsleitung (20) direkt mit der Hauptdruckleitung (6) verbindbar ist.

## Beschreibung

Die Erfindung betrifft eine hydraulische Schaltungsanordnung bei Automatikgetrieben von Kraftfahrzeugen mit einem hydrodynamischen Drehmomentwandler und hydraulisch betätigbaren Verbrauchern, insbesondere Schaltelementen, wobei die Schaltungsanordnung aus einem von einer Primärpumpe gespeisten Primärkreis und einem von einer Sekundärpumpe gespeisten Sekundärkreis besteht (nach dem Oberbegriff des Patentanspruches 1).

Automatikgetriebe für Kraftfahrzeuge weisen eine vom Motor des Kraftfahrzeuges angetriebene Primärpumpe auf, welche Hydrauliköl in einen Primärkreis fördert, in welchem sich auch der hydrodynamische Drehmomentwandler befindet. Wie aus der DE-C 34 10 226 bekannt, ist die Primärpumpe auf der Antriebsseite des Wandlers angeordnet und versorgt diesen mit Hydrauliköl. Es ist auch bekannt, zusätzlich zur Primärpumpe eine Sekundärpumpe vorzusehen, die am Getriebeabtrieb positioniert ist und daher unabhängig vom Motor des Kraftfahrzeuges arbeitet. Eine solche Sekundärpumpe läuft bei Normalbetrieb der Primärpumpe im stand by, d. h. sie fördert Öl drucklos in einen Getriebesumpf. Mit einer solchen Sekundärpumpe kann das Fahrzeug abgeschleppt werden, d. h. die Sekundärpumpe baut den zum Schließen der Schaltelemente erforderlichen Druck auf. Eine Sekundärpumpe kann auch beim Anschleppen des Fahrzeuges von Vorteil sein, wenn die Stromversorgung des Fahrzeuges in der Lage ist, die Magnetventile zu schalten. Im Falle des Abschleppens oder des Anschleppens des Fahrzeuges muss die Sekundärpumpe zugeschaltet bzw. in der Weise angesteuert werden, dass sie möglichst schnell und effektiv die Funktion der Primärpumpe übernehmen kann.

Es ist daher Aufgabe der Erfindung, eine hydraulische Schaltungsanordnung der eingangs genannten Art dazustellen, die eine schnelle und wirksame Ansteuerung der Sekundärpumpe ermöglicht.

Die Lösung dieser Aufgabe ergibt sich aus den Merkmalen des Patentanspruches 1. Danach kann die Sekundärpumpe direkt mit der Druckleitung für die Schaltelemente des Automatikgetriebes verbunden werden - dies hat den Vorteil, dass der erforderliche Schaltdruck zum Schließen der Schaltelemente in kürzester Zeit aufgebaut werden kann. Dies ist insbesondere für den Anschleppvorgang wichtig.

Gemäß einer vorteilhaften Weiterbildung der Erfindung ist in die Verbindungsleitung ein Rückschlagventil geschaltet, welches im Normalbetrieb, d. h. bei laufender Primärpumpe verhindert, dass Öl in den Sekundärkreis und damit in den Getriebesumpf gefördert wird. Bei laufender Sekundärpumpe öffnet dieses Rückschlagventil in Richtung Primärkreis, d. h. Hauptdruckleitung.

Nach einer weiteren vorteilhaften Ausgestaltung der Erfindung ist das Umsteuerventil als federbelastetes Hydraulikventil ausgebildet, welches in Abhängigkeit der Druckdifferenz zwischen Primär- und Sekundärkreis schaltet, d. h. entweder den Durchgang von der Sekundärpumpe zum Sumpf unterbindet oder öffnet. Das Umsteuerventil arbeitet somit automatisch: wenn die Primärpumpe ausfällt, steuert das Umsteuerventil aufgrund der veränderten Druckdifferenz um, d. h. der Ventildurchgang hinter der Sekundärpumpe wird gesperrt, sodass diese über das Rückschlagventil in die Hauptdruckleitung fördert.

Nach einer vorteilhaften Weiterbildung der Erfindung ist in der Hauptdruckleitung zwischen der Zweigleitung zu den Schaltelementen und dem Wandler ein Hauptdruckventil mit einer Bypassblende angeordnet. Das Hauptdruckventil hält den Systemdruck, also den Druck zum Schließen der Schaltelemente und sonstigen Verbraucher, während die Bypassblende einen Bypassölstrom zur Versorgung des Wandlers und der Schmierung des Getriebes durchlässt.

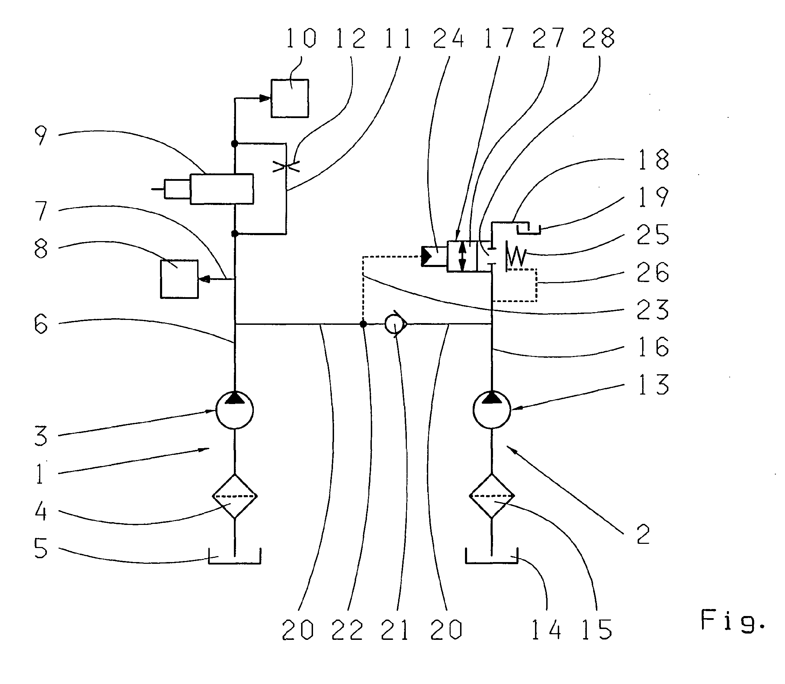

Ein Ausführungsbeispiel der Erfindung ist in der Zeichnung dargestellt und wird im Folgenden näher beschreiben.

Die einzige Figur zeigt eine hydraulische Schaltung für ein nicht dargestelltes Kraftfahrzeug-Automatikgetriebe, bestehend aus einem hydrodynamischen Drehmomentwandler und einem Schaltgetriebe, welches hydraulisch betätigbare Schaltelemente (Kupplungen und Bremsen) sowie schaltbare Nebenabtriebe, d. h. so genannte Verbraucher aufweist. Das Schaltschema umfasst einen teilweise dargestellten Primärkreis 1 und einen ebenfalls nicht vollständig dargestellten Sekundärkreis 2. Der Primärkreis 1 umfasst eine Primärpumpe 3, welche über ein Filter 4 aus einem Behälter 5 Öl ansaugt und in eine Hauptdruckleitung 6 fördert. Von der Hauptdruckleitung 6 geht eine Zweigleitung 7 ab, die zu hydraulischen Verbrauchern 8, d. h. insbesondere den Schaltelementen des Automatikgetriebes führt. Die Hauptdruckleitung 6 führt über ein Hauptdruckventil 9 zu einem hydrodynamischen Wandler 10 des Automatikgetriebes. Das Hauptdruckventil 9 reguliert den Druck in der Hauptdruckleitung 6; es wird durch eine Bypassleitung 11 umgangen, in welcher eine Bypassblende 12 angeordnet ist.

Der Sekundärkreis 2 weist eine Sekundärpumpe 13 auf, die Öl aus einem Behälter 14 über ein Filter 15 ansaugt und in eine Nebendruckleitung 16 fördert, die zu einem Umsteuerventil 17 führt. An das Umsteuerventil 17 schließt sich eine Rückleitung 18 an, welche in einen Getriebesumpf 19 mündet. Zwischen der Nebendruckleitung 16 des Sekundärkreises 2 und der Hauptdruckleitung 6 des Primärkreises 1 ist eine Verbindungsleitung 20 mit einem Rückschlagventil 21 angeordnet, welches nach links, d. h- in Richtung der Hauptdruckleitung 6 öffnet und nach rechts, d. h. in Richtung der Nebendruckleitung 16 schließt. Von der Verbindungsleitung 20 geht im Verzweigungspunkt 22, d. h. vor dem Rückschlagventil 21 eine Druckleitung 23 ab, welche in einen Druckraum 24 des Umsteuerventils 17 mündet und das Umsteuerventil 17 mit dem Druck in der Hauptdruckleitung 6 beaufschlagt. Andererseits ist das Umsteuerventil 17 über eine Feder 25 belastet und über eine Druckleitung 26 mit dem Druck in der Nebendruckleitung 16 beaufschlagt. Das Umsteuerventil 17 kann als Schieberventil mit zwei Positionen ausgebildet sein, die durch die Symbole 27 (Durchlauf) und 28 (Sperren) gekennzeichnet sind.

Die Funktion der oben beschriebenen Schaltungsanordnung ist die Folgende: Bei Normalbetrieb, d. h. wenn der Motor läuft, fördert die Primärpumpe 3 und baut in der Hauptdruckleitung 6 einen Öldruck auf, der sich über die Leitungen 20, 23 bis in den Druckraum 24 des Umsteuerventils 17 fortsetzt. Dieser von der Primärpumpe 3 erzeugte Druck steuert das Umsteuerventil 17 gegen die Kraft der Feder 25 aus der in der Zeichnung dargestellten Position 28 in die Position 27 um, d. h. auf Durchlauf. Die fahrgeschwindigkeitsabhängig fördernde Sekundärpumpe 13 fördert somit durch die Nebendruckleitung 16 und das Umsteuerventil 17 drucklos in die Rücklaufleitung 18 und damit in den Getriebesumpf 19. Das Rückschlagventil 21 verhindert, dass bei Normalbetrieb Öl über die Verbindungsleitung 20 in die Nebendruckleitung 16 und damit in den Getriebesumpf 19 leckt.

Bei Abschleppbetrieb sind Motor des Kraftfahrzeuges und/oder Primärpumpe 3 defekt. Die Sekundärpumpe 13, die aufgrund der Bewegung des Fahrzeuges angetrieben wird, fördert in die Nebendruckleitung 16 und über die Verbindungsleitung 20, in welcher das Rückschlagventil 21 öffnet, in die Hauptdruckleitung 6, d. h. direkt zu den Schaltelementen 8. Darüber hinaus gelangt das Öl über das Hauptdruckventil 9 in den Wandler 10. Am Umschaltventil 17 steht an beiden Seiten über die Druckleitung 23 und die Druckleitung 26 jeweils derselbe Druck an, sodass das Umsteuerventil 17 aufgrund der Kraft der Feder 25 in die in der Zeichnung dargestellte Position 28, d. h. Sperren umsteuert. Das von der Sekundärpumpe 13 geförderte Öl fließt somit ausschließlich über die Verbindungsleitung 20 in den Primärkreis 1, sodass die Schaltelemente 8 mit dem erforderlichen Schaltdruck beaufschlagt werden.

Der so genannte Anschleppbetrieb liegt dann vor, wenn der Motor nicht angesprungen ist, z. B. aus Gründen einer defekten Batterie. Die Primärpumpe 3 fällt somit aus und die Sekundärpumpe 13 wird angetrieben, sobald das Fahrzeug geschleppt wird. Das Umsteuerventil 17 schaltet dann wieder aufgrund der Druckdifferenz auf Position 28 (Sperren) um, sodass das von der Sekundärpumpe 13 geförderte Öl ausschließlich über die Verbindungsleitung 20 in die Hauptdruckleitung 6 und die Zweigleitung 7 strömt - damit kann ein Gang durch die Schaltelemente 8 geschaltet werden. Der Kraftfluss von den angetriebenen Antriebsrädern ist über Getriebe und Wandler zum Motor hergestellt, sodass dieser gestartet werden kann. Damit beginnt auch die Primärpumpe 3 wieder zu fördern, während gleichzeitig auch noch die Sekundärpumpe 13 fördert. Die Schaltposition des Umsteuerventils 17 wird durch den Differenzdruck in den Leitungen 23 und 26 bestimmt. Die Verbindung zwischen schleppendem und geschlepptem Fahrzeug wird im Stillstand gelöst, damit erfolgt keine Förderung mehr durch die Sekundärpumpe 13. Dagegen fördert die Primärpumpe 13, die nunmehr vom Motor angetrieben wird, sodass das Umsteuerventil 17 aufgrund der Druckdifferenz in die Position 27 (Durchlauf) umsteuert - diese Position entspricht dann wieder dem Normalbetrieb.

### Bezugszeichen

- 1: Primärkreis
- 2: Sekundärkreis
- 3: Primärpumpe
- 4: Filter
- 5: Behälter
- 6: Hauptdruckleitung
- 7: Zweigleitung
- 8: Verbraucher (Schaltelemente)
- 9: Hauptdruckventil
- 10: Wandler
- 11: Bypassleitung
- 12: Bypassblende
- 13: Sekundärpumpe
- 14: Behälter
- 15: Filter
- 16: Nebendruckleitung
- 17: Umsteuerventil
- 18: Rückleitung
- 19: Getriebesumpf
- 20: Verbindungsleitung
- 21: Rückschlagventil
- 22: Verzweigung
- 23: Druckleitung
- 24: Druckraum
- 25: Ventilfeder
- 26: Druckleitung
- 27: Position "Durchlauf"
- 28: Position "Sperren"

## Patentansprüche

1. Hydraulische Schaltungsanordnung bei Automatikgetrieben von Kraftfahrzeugen mit einem hydrodynamischen Drehmomentwandler und hydraulisch betätigbaren Verbrauchern, insbesondere Schaltelementen, wobei die Schaltungsanordnung aus einem von einer Primärpumpe gespeisten Primärkreis und einem von einer Sekundärpumpe gespeisten Sekundärkreis besteht, **dadurch gekennzeichnet, dass** der Primärkreis (1) eine von der Primärpumpe (3) zum Wandler (10) führende Hauptdruckleitung (6) und eine an die Hauptdruckleitung (6) angeschlossene, zu den Schaltelementen (8) führende Zweigleitung (7) aufweist, dass der Sekundärkreis (2) eine von der Sekundärpumpe (13) zu einem Umsteuerventil (17) führende Nebendruckleitung (16) aufweist und dass der Sekundärkreis (2) mittels des Umsteuerventils (17) über eine Verbindungsleitung (20) direkt mit der Hauptdruckleitung (6) verbindbar ist.

2. Schaltungandordnung nach Anspruch 1, **dadurch gekennzeichnet, dass** in die Verbindungsleitung (20) ein Rückschlagventil (21) geschaltet ist, welches bei einem Druckgefälle vom Primärkreis (1) zum Sekundärkreis (2) schließt.

3. Schaltungsanordnung nach Anspruch 1 oder 2, **dadurch gekennzeichnet, dass** das Umsteuerventil (17) als federbelastetes und druckbeaufschlagtes Hydraulikventil ausgebildet ist, welches in Abhängigkeit von der Druckdifferenz zwischen Haupt- und Nebendruckleitung (6, 16) in eine Durchlaufposition (27) oder eine Sperrposition (28) umsteuert.

4. Schaltungsanordnung nach Anspruch 1, 2 oder 3, **dadurch gekennzeichnet, dass** in der Hauptdruckleitung (6) ein Hauptdruckventil (9) angeordnet ist, zu dem eine Bypassblende (12) parallel geschaltet ist.
